# EUROPÄISCHE PATENTSCHRIFT

(11) **EP 1 061 791 B1**
(45) Veröffentlichungstag und Bekanntmachung des Hinweises auf die Patenterteilung: **15.05.2002**
(21) Anmeldenummer: 99910330.2
(22) Anmeldetag: 05.03.1999
(51) Int. Cl.: A01D 65/02

(54) **ÄHRENHEBER**
EAR LIFTER
RELEVEUR D'EPIS

(30) Priorität: 10.03.1998 SI 9800071; 23.01.1999 DE 19902459
(43) Veröffentlichungstag der Anmeldung: 27.12.2000
(73) Patentinhaber: Schumacher, Gustav, 57612 Eichelhardt (DE)
(72) Erfinder: SCHUMACHER, Gustav, D-57612 Eichelhardt (DE); SCHUMACHER, Friedrich-Wilhelm, D-57612 Eichelhardt (DE); KLEPEJ, Srecko, 3301 Petrovce (SI)
(74) Vertreter: Harwardt, Günther, Dipl.-Ing.
(86) Internationale Anmeldenummer: EP9901430
(87) Internationale Veröffentlichungsnummer: WO9945758

(56) Entgegenhaltungen:
- DE-A- 4 323 053
- GB-A- 2 028 088
- US-A- 1 818 335
- US-A- 3 313 095

## Beschreibung

Die Erfindung betrifft einen Ährenheber für Erntemaschinen-Mähsysteme mit Mähfingern, die an einem Mähbalken angebracht sind, umfassend eine Tragschiene, die mit dem Mähbalken verbindbar ist, einen Halmheber, der mit der Tragschiene verbunden ist, und ein Befestigungselement, das mit der Tragschiene verbunden ist und am Mähfinger festlegbar ist, das ein an der Tragschiene angebrachtes Halteelement aufweist, das zwei beabstandete Schenkel besitzt, zwischen die die Spitze eines Mähfingers einführbar ist, und dem Haltemittel zugeordnet sind, die zur Abstützung mit einer Oberseite des Mähfingers in Kontakt bringbar sind.

Bei derartigen Mähsystemen sind entlang des Mähbalkens verteilt Mähfinger angeordnet, beispielsweise mit diesem verschraubt, welche den Messerbalken führen und die Gegenschneide für die Schneiden der am hin- und hergehend bewegbaren Messerbalken angebrachten Mähklingen dienen. Um abgeknicktes oder lagerndes Halmgut sicher mähen zu können, werden Ährenheber eingesetzt. Diese Ährenheber heben das Halmgut an. Je nach Art bzw. Beschaffenheit des Halmgutes und entsprechend gewünschter Schnitthöhe sind unterschiedliche Einstellungen des Mähsystems erforderlich. Dies hat zur Folge, daß sich auch die Ausrichtung des Ährenhebers zum Boden ändert. Es wird jedoch eine Ausrichtung angestrebt, die eine möglichst parallele Führung des Gleitbereiches des Ährenhebers zum Boden erlaubt. Dies wird in der Praxis durch Ährenheber erreicht, die eine Veränderung der Orientierung ihres über die Mähfingerspitze vorstehenden Bereiches erlauben. Hierzu wird dieser Bereich mehr oder weniger im Verhältnis zum Mähfinger angehoben oder abgesenkt. Hierzu ist es aus der GB-A-2028088 bekannt, der Tragschiene des Ährenhebers ein Halteelement zuzuordnen, das zwei Schenkel umfaßt, zwischen die die Spitze eines Mähfingers einführbar ist. Die beiden Schenkel weisen jeweils mehrere Paare bildende Bohrungen auf, die auf unterschiedlichem Höhenniveau angeordnet sind. Durch die zu einem Paar gehörenden Bohrungen kann eine Sperrstange oder Sperrbolzen hindurchgeführt werden, die bzw. der sich auf der Oberseite des Mähfingers abstützt. Je nach erforderlicher Orientierung kann eines der Bohrungspaare ausgewählt werden. Diese Art der Verbindung erfordert Geschick bei der Handhabung und hat den Nachteil, daß die Sperrstange sowohl im Betrieb als auch nach dem Lösen verloren gehen kann. Um dies zu vermeiden, sind gemäß dem Stand der Technik verschiedene Mittel vorgesehen, um die Sperrstange am Halteelement sicher festzulegen.

Der Erfindung liegt die Aufgabe zugrunde, einen Ährenheber vorzuschlagen, dessen Handhabung vereinfacht ist.

Zur Lösung dieser Aufgabe ist erfindungsgemäß vorgesehen, daß die Haltemittel einen zweiarmigen Sperrhebel mit einem ersten Hebelarm, der eine Stützfläche zur Abstützung an der Oberseite des Mähfingers besitzt, und einen zweiten Hebelarm mit mindestens einer Rastfläche aufweisen, daß der zweiarmige Sperrhebel um einen Schwenkzapfen zwischen den beiden Schenkeln schwenkbar gelagert ist und daß das Befestigungselement ferner ein Sperrelement umfaßt, welches mit einer der Rastflächen des zweiten Hebelarmes in Kontakt bringbar ist und somit den Sperrhebel in seiner Lage hält.

Von Vorteil bei dieser Ausbildung ist, daß bei der Ausrichtung des Ährenhebers ausgehend von der gelösten Stellung die Mähfingerspitze auf einen der Hebelarme auftrifft und dabei eine Verschwenkung des Sperrhebels zur Sperrstellung einleitet. Zur Überführung des Sperrhebels in die gewünschte Stellung kann durch Anheben des über die Mähfingerspitze vorstehenden Bereiches des Ährenhebers mit einer Hand und durch Drücken mit der anderen Hand auf den zweiten Arm des Sperrhebels, dieser in Kontakt mit dem Sperrelement gebracht werden. Es sind keine Bauteile vorhanden, die verloren gehen können. Darüber hinaus ist es nicht erforderlich die richtige Stellung zu finden, um die Sperrstange durch die Bohrungen des Bohrungspaars hindurchführen zu können, wie dies beim Stand der Technik erforderlich ist.

Zwar ist es möglich, eine beliebige Anzahl von Rastflächen vorzusehen, es genügen jedoch drei Rastflächen. Dabei sind diese vor-zugsweise als Bestandteile von Rastzähnen ausgebildet. Eine gün-stige Gestaltung ergibt sich, wenn das Sperrelement durch eine in Richtung zu den Rastflächen des Sperrhebels federnd in Kontakt tretende Blattfeder dargestellt ist. Die jeweilige Raststellung wird dann automatisch eingenommen, ohne daß es einer Verriegelung von Hand bedarf. Zur Verrastung ist die Blattfeder mit einer Stirnfläche versehen, die in Anlage zu einer der Rastflächen tritt. Dies kann beispielsweise das freie Ende der ansonsten ortsfest angebrachten Blattfeder sein. Dabei kann eine Orientierung gewählt werden, die gewährleistet, daß keine Gefahr besteht, daß die Blattfeder bei einer Druckbeaufschlagung ausweicht. Es ist jedoch auch eine Gestaltung möglich, nach der die Blattfeder einen Durchbruch aufweist. Eine der Flächen des Durchbruchs ist als Kontaktfläche ausgestaltet. Der Sperrhebel tritt mit seiner Rastfläche in Kontakt zu der Kontaktfläche. Dabei kann eine Anordnung getroffen werden, die dafür sorgt, daß die Blattfeder im verrasteten Zustand auf Zug beansprucht wird.

Eine besonders günstige Gestaltung ergibt sich, wenn der erste und der zweite Hebelarm winklig aneinanderstoßen und die Schwenkachse des Schwenkzapfens im Stoßbereich derselben angeordnet ist. Hierzu ist vorzugsweise der Sperrhebel mit einer Bohrung versehen. Mit dieser ist der Sperrhebel auf dem Schwenkzapfen aufgenommen. Die Lage des Befestigungselementes kann dabei so gewählt werden, daß der zweite Hebelarm durch den Mähfinger bei der Montage in eine erste Raststellung, bei der eine der Rastflächen in Wirkverbindung mit dem Sperrelement bringbar ist, bewegt wird. Zur Lösung ist der Sperrhebel außer Wirkverbindung mit dem Sperrelement bringbar. Für die Ausgestaltung mit einem als Blattfeder gestalteten Sperrelement kann dazu z. B. ein Schraubendreher benutzt werden. Obwohl es möglich ist, die Schenkel des Befestigungselementes einstückig mit der Tragschiene auszugestalten, bietet es sich vorzugsweise an, die Schenkel mit einem Steg miteinander zu verbinden und den Steg an der Tragschiene festzulegen. Hierdurch ergibt sich für das Halteelement eine U-förmige Gestaltung. Alternativ können die Schenkel durch zwei voneinander getrennte Stege miteinander verbunden sein. Die Stege sind an der Tragschiene festgelegt. Die Höhe der Schenkel ist so bemessen, daß der erste Hebelarm nach oben über diese vorsteht, um von außen auf den ersten Hebelarm einwirken zu können. In Ausgestaltung der Erfindung ist vorgesehen, die Blattfeder geschützt zwischen den beiden Schenkeln in dem Bewegungsbereich des zweiten Hebelarmes anzuordnen.

Für eine alternative Gestaltung der Verrastung ist vorgesehen, den Sperrhebel im Bereich seines zweiten Hebelarmes mit einem Langloch zu versehen, das von dem Schwenkzapfen durchdrungen wird. Dabei ist das Sperrelement als ortsfester Anschlag gestaltet. Zum Lösen kann der Sperrhebel außer Kontakt zum Anschlag gezogen werden. Die Rückführung in die verrastete Stellung hat dabei von Hand zu erfolgen. Es ist aber auch möglich, den Sperrhebel durch Federkraft zu einer Stellung, in der der Anschlag im Bewegungsbereich des zweiten Hebelarmes liegt, zu beaufschlagen. Für die Ausgestaltung des Halteelementes ist vorgesehen, daß dessen beiden Schenkel durch einen Steg miteinander verbunden sind, so daß sich eine im wesentlichen U-förmige Gestaltung ergibt. Der Anschlag ist dabei vorzugsweise mit dem Steg verbunden bzw. Bestandteil desselben und der Sperrhebel ist zwischen den beiden Schenkeln angeordnet. Der Anschlag kann durch einen gebogenen Teil des Steges dargestellt sein.

Zur Darstellung der Federkraft ist vorzugsweise eine Druckfeder vorgesehen, die in dem Langloch des zweiten Hebelarmes des Sperrhebels aufgenommen ist und zwischen einer Endfläche des Langloches und dem Schwenkzapfen abgestützt ist. Um das Lösen der Verrastung des Sperrhebels zu erleichtern, ist dessen erster Hebelarm mit einem Durchburch versehen. Durch diesen kann beispielsweise ein Draht oder ein Werkzeug hindurchgeführt werden, um ein Verlagern desselben in die gelöste Stellung zu erleichtern. Eine Druckfeder ist für die Wirkung der Verriegelung nicht erforderlich, erleichtert jedoch die Verstellung des Sperrhebels in eine Position, bei der dessen zweiter Hebelarm mit seinen Rastflächen in Anlage zu dem Anschlag gebracht werden kann. Der Sperrhebel selbst wird in der verriegelten Position beispielsweise durch die elastische Vorspannung der Tragschiene gehalten. Diese ist mit einem Ende nämlich am Mähbalken festgelegt, beispielsweise dadurch, daß sie am Ende gabelförmig gestaltet ist und mit der Ausnehmung in eine Rille eines Bolzen einsteckbar ist. Zur zusätzlichen Sicherung des Sperrhebels, der mit einem Langloch versehen ist, gegen Verlagerung, ist eine Raststelle zur Aufnahme des Schwenkzapfens vorgesehen.

Verschiedene Ausführungsbeispiele der Erfindung sind in der Zeichnung schematisch dargestellt.

Es zeigt
- Figur 1: die Zuordnung eines Ährenhebers zu einem Mähbalken,
- Figur 2: einen Längsschnitt durch eine erste Ausführungsform eines Befestigungselementes in gelöster Position,
- Figur 3: eine der Figur 2 entsprechende Schnittdarstellung bei Verrastung des Sperrhebels in der ersten Sperrstellung,
- Figur 4: eine der Figur 2 entsprechende Schnittdarstellung mit einer Verrastung des Sperrhebels in der dritten Raststellung,
- Figur 5: einen Längsschnitt durch eine abgewandelte Ausführungsform des Befestigungselementes hinsichtlich der Anordnung des als Blattfeder gestalteten Sperrelementes,
- Figur 6: eine zur Ausführung gemäß Figur 5 passende Blattfeder mit einem Durchbruch,
- Figur 7: eine zu der Ausführungsform gemäß Figuren 2 bis 4 passende Blattfeder als Sperrelement,
- Figur 8: einen Längsschnitt durch eine weitere Ausführungsform eines Befestigungselementes in der Lösestellung,
- Figur 9: das Befestigungselement gemäß Figur 8 in einer ersten Raststellung des Sperrhebels und
- Figur 10: einen Längsschnitt entsprechend Figur 8, wobei sich der Sperrhebel in der zweiten Raststellung befindet.

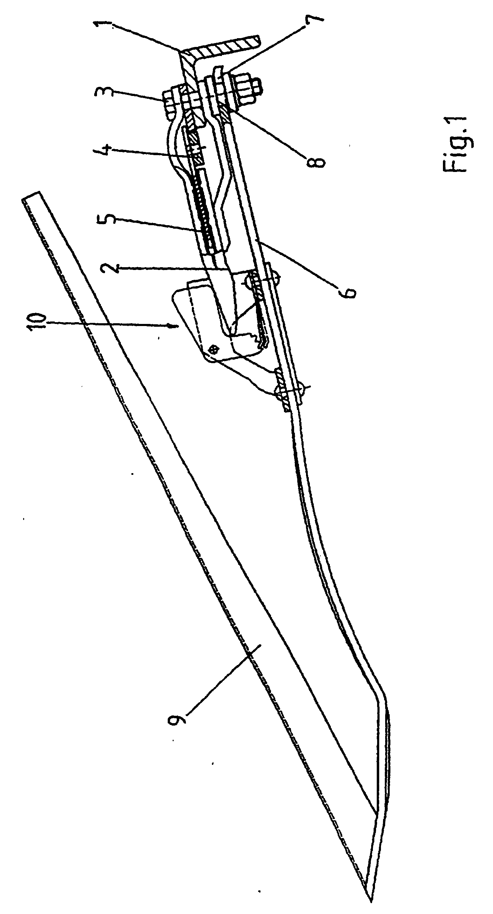

Aus Figur 1 ist ein Querschnitt durch einen Mähbalken 1 erkennbar. Dem Mähbalken 1 ist ein Mähfinger 2 zugeordnet. Der Mähfinger 2 ist durch eine Schraube 3 am Mähbalken 1 festgelegt. In einem Spalt des Mähfingers 2 ist der Messerbalken 4, der die Klingen 5 trägt, hin- und hergehend bewegbar, so daß der Messerbalken 4 in die Ebene des Zeichnungsblattes hinein- bzw. aus dieser herausbewegt wird. Der Mähfinger 2 umfaßt einen Oberfinger und einen Unterfinger zwischen denen die Klingen 5 gehalten sind. Der Mähfinger 2 dient als Gegenschneide für die Schneiden der Klingen 5. Der Ährenheber umfaßt eine Tragschiene 6, die beispielsweise an einem Ende mit einer von der entsprechenden Stirnfläche ausgehenden Ausnehmung versehen ist, mit der die Tragschiene 6 in eine Nut 8 eines ringförmigen Elementes, das auf der Schraube 3 sitzt, einführbar ist. Die Tragschiene 6 ist elastisch federnd ausgestaltet. An das freie und nach vorne über den Mähfinger 2 vorstehende Ende ist ein winklig abstehender Halmheber 9 angeschlossen. Im Bereich zwischen dem Befestigungsende 7 der Tragschiene 6 und dem Ende, an dem der Halmheber 9 angebracht ist, ist ein Befestigungselement 10 angeordnet, das dazu dient, den Ährenheber hinsichtlich seines über den Mähfinger 2 vorstehenden Bereiches gegenüber dem Untergrund auszurichten, wobei die Tragschiene 6 verspannt wird und das Befestigungselement 10 zur Positionierung gegenüber dem Mähfinger 2 in unterschiedlichen Stellungen dient.

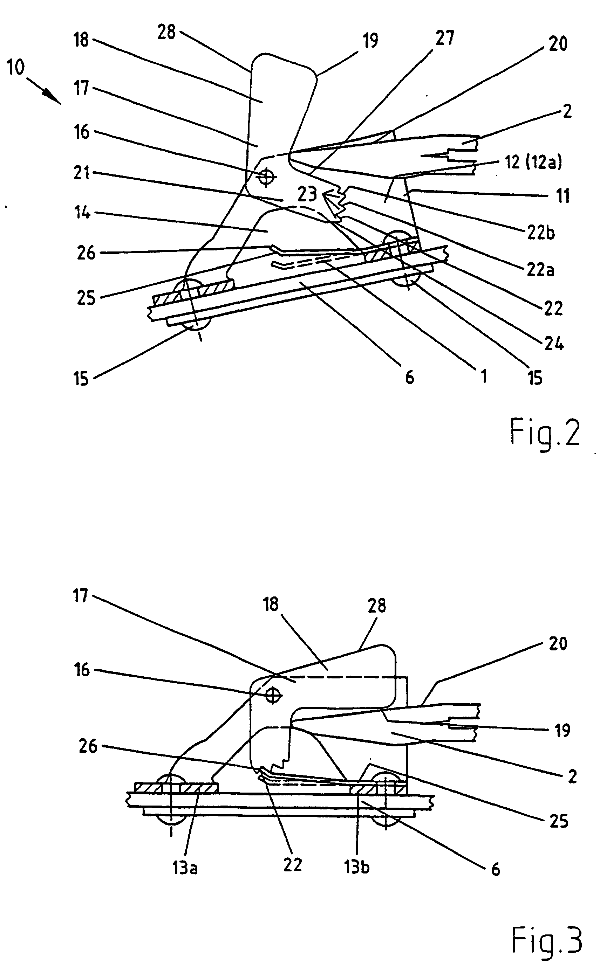

In den Figuren 2 bis 10 sind unterschiedlich gestaltete Befestigungselemente zur Ausrichtung des Ährenhebers im Verhältnis zum Mähfinger dargestellt.

Eine erste Ausführungsform ergibt sich aus den Figuren 2 bis 4 und 7, die nachfolgend zusammen beschrieben sind.

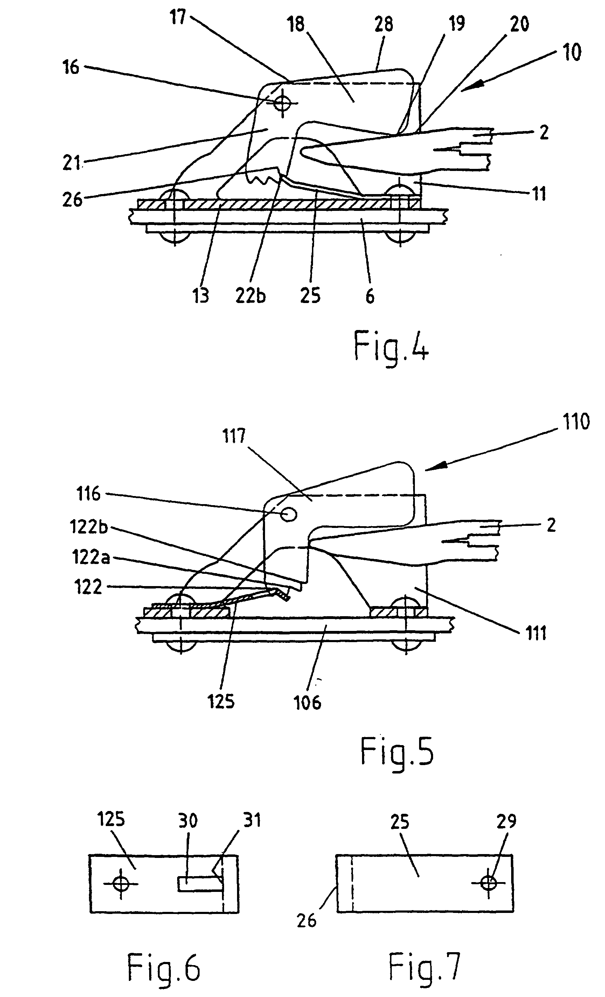

Das Befestigungselement 10 gemäß einer ersten Ausführungsform umfaßt ein im Querschnitt U-förmiges Halteelement 11 mit zwei Schenkeln 12, 12a, die parallel mit Abstand zueinander angeordnet sind und die durch einen Steg 13 (siehe Figur 4) bzw. die Stege 13a und 13b (siehe Figuren 2, 3, 5) miteinander verbunden sind. Zum Steg 13 hin weisen die beiden Schenkel 12, 12a einen Durchbruch 14 auf. Der Steg 13 bzw. die Stege 13a und 13b liegen auf der Tragschiene 6 auf und sind mit dieser zur Befestigung des Halteelementes 11 durch Nieten 15 oder Schrauben verbunden. Zu der den Stegen 13, 13a, 13b entfernten oberen Fläche der beiden Schenkel 12, 12a hin, ist ein Schwenkzapfen 16 vorgesehen, der mit den beiden Schenkeln 12, 12a verbunden ist. Der Schwenkzapfen 16 lagert einen mit einer Bohrung versehenen Sperrhebel 17, mit der er auf dem Schwenkzapfen 16 aufsitzt. Der Sperrhebel 17 hat die Form eines Winkelhebels mit einem ersten Hebelarm 18 und einem zweiten Hebelarm 21. Der Schwenkzapfen 16 lagert den Sperrhebel 17 etwa in dem Bereich, in dem die beiden Hebelarme 18, 21 aneinanderstoßen. Die innere Fläche des ersten Hebelarmes bildet die Stützfläche 19, die zum Teil einen Verlauf mit einem Radius aufweisen kann. Auf die Außenfläche 28 des ersten Hebelarmes 18 kann zur Verschwenkung von Hand eingewirkt werden. Der zweite Hebelarm 21 weist an seinem dem Schwenkzapfen 16 entfernten freien Ende Zähne 23 auf, die jeweils eine Rastfläche 22, 22a, 22b bilden. Vor dem die erste Rastfläche 22 aufweisenden Zahn 23 ist eine Gleitfläche 24 vorgesehen. Das die Zähne 23 und Rastflächen 22, 22a, 22b aufweisende Ende des Sperrhebels 17 liegt im Bewegungsbereich der Stirnfläche 26 eines abgekröpften Endes einer Blattfeder 25, die als Sperrelement dient und welche mit ihrem der Stirnfläche 26 entfernten Ende unter Zuhilfenahme einer der Nieten 15 oder Schrauben mit dem Halteelement 11 und der Tragschiene 6 fest verbunden ist. Ferner ist die Spitze bzw. das Ende des Mähfingers 2 ersichtlich, dessen Oberseite die Bezugszahl 20 trägt. Der Sperrhebel 17 ist außer Eingriff zu der Blattfeder 25. Bei weiterer Annäherung des Halteelementes 10 nach oben auf den Mähfinger 2 zu, gelangt dieser in den Bereich der Innenfläche 27 des zweiten Hebelarmes 21 des Sperrhebels 17 und verschwenkt diesen im Uhrzeigersinne um den Schwenkzapfen 16. Durch Einwirken von Hand auf die Außenfläche 28 des ersten Hebelarmes 18 des Sperrhebels 17 kann dieser so verschwenkt werden, daß die Rastfläche 22 des ersten Zahnes 23 in Anlage zur Stirnfläche 26 der Blattfeder 25, die von der Gleitfläche 24 zunächst nach unten verlagert wird, gelangt, so daß die in Figur 3 dargestellte Position eingenommen wird. Dabei stützt sich der Sperrhebel 17 im linksdrehenden Sinne mit seiner Rastfläche 22 gegen die Stirnfläche 26 der Blattfeder 25 ab. Da diese ortsfest gehalten ist, ist der Sperrhebel 17 verrastet. Er stützt sich mit seiner Stützfläche 19 auf der Oberseite 20 des Mähfingers 2 ab und hält die Tragschiene 6 in diesem Bereich in einer ersten Abstandspositionierung zum Mähfinger 2. Wird weiterhin auf den Sperrhebel 17 im rechtsschwenkenden Sinne durch Drücken auf die Außenfläche 28 bei gleichzeitigem weiteren Anheben des freien Endes der Tragschiene 6 eingewirkt, kann der Sperrhebel 17 bis zu der in Figur 4 eingenommenen Position verschwenkt werden, in der sich die Stirnfläche 26 der Blattfeder 25 in Anlage zur Rastfläche 22b befindet. Es ist erkennbar, daß in dieser Position der Abstand zwischen dem Steg 13 und dem Mähfinger 2 geringer ist als bei der Position, die in Figur 3 dargestellt ist. Dabei erfährt das freie Ende des Ährenhebers eine mehr nach oben gerichtete Positionierung. Beim Lösen kann durch die Öffnung 14 ein Werkzeug, beispielsweise ein Schraubendreher, in den Bereich zwischen den beiden Schenkeln 12, 12a eingeführt werden, um auf die Blattfeder 25 einzuwirken. Zur Erleichterung des Lösens kann zusätzlich auf den Sperrhebel 17 bzw. dessen Außenfläche 28 zu einer weiteren Verschwenkung im Uhrzeigersinne eingewirkt werden, bis die Blattfeder 25 freigegeben ist und eine Position einnimmt, wie sie beispielsweise gestrichelt in den Figuren 2 und 3 dargestellt ist. Der Sperrhebel kann dann in die in Figur 2 gestellte Position zurückschwenken.

Bei der in Figur 7 dargestellten Blattfeder 25 ist noch die Bohrung 29 erkennbar, durch die der Niet 15 zur Befestigung der Blattfeder 25 zusammen mit dem Haltelement an der Tragschiene 6 hindurch geführt ist.

Nachfolgend wird das Ausführungsbeispiel gemäß Figuren 5 und 6 beschrieben. Teile, die der Ausführungsform gemäß Figuren 1 bis 4 entsprechen, sind mit Positionszeichen bezeichnet, die gegenüber den entsprechenden gemäß der Ausführungsform den Figuren 2 bis 4 um die Zahl 100 erhöht sind. Der Aufbau des Befestigungselementes 110 entspricht hinsichtlich des Sperrhebels 117, des Halteelementes 111 und hinsichtlich der Anordnung des Schwenkzapfens 116 sowie der Zuordnung zur Tragschiene 106 dem Ausführungsbeispiel gemäß Figuren 2 bis 4. Abweichend zu der vorgenannten Ausführungsform weist das Befestigungselement 110 eine Blattfeder 125 als Sperrelement auf, die entsprechend Figur 6 gestaltet ist. Abweichend ist auch die Zuordnung zum Halteelement 111 gestaltet. Die Blattfeder 125 ist nämlich an dem dem Mähfinger 2 abgewandten Ende im Halteelement 111 durch den Niet oder die Schraube, der (die) das Halteelement 111 an der Tragschiene 106 festlegt, befestigt. Die Blattfeder 125 weist einen Durchbruch 30 auf, der eine Kontaktfläche 31 besitzt, die mit einer der entsprechenden Rastflächen 122, 122a, 122b des Sperrhebels 117 in Kontakt tritt, so daß bei dem verrasteten Zustand die Abstützung auf dem Mähfinger 2 ein Moment im linksdrehenden Sinne auf den Sperrhebel 117 und damit eine Zugkraft in der Blattfeder 125 erzeugt. Hierdurch wird erreicht, daß auch unter hohen, auf den Sperrhebel 117 einwirkenden Kräften keine Gefahr des Ausknickens der Blattfeder 125 gegeben ist.

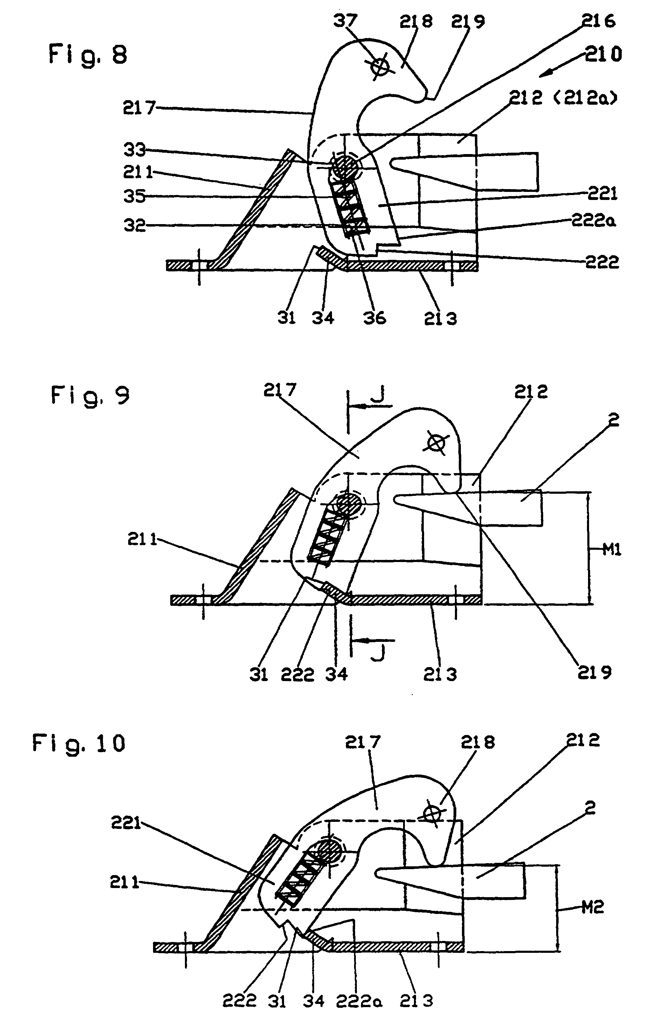

Die Figuren 8 bis 10 zeigen eine dritte Ausführungsform eines erfindungsgemäßen Befestigungselementes 210. Gegenüber vergleichbaren Bauteilen gemäß der Ausführungsform nach den Figuren 2 bis 4 sind die entsprechenden Teile mit Bezugszeichen versehen, die gegenüber denen nach der obigen Ausführungsform der Figuren 2 bis 4 um die Zahl 200 erhöht sind. Es ist ebenfalls ein im wesentlichen im Querschnitt U-förmig gestaltetes Halteelement 211 vorgesehen, daß zu dem dem Mähfinger 2 abgewandten Ende hin zusätzlich noch durch eine Wand geschlossen sein kann. Zwischen den beiden Schenkeln 212, 212a ist der Sperrhebel 217 auf einem Schwenkzapfen 216 schwenkbar gelagert. Der Schwenkzapfen 216 durchdringt dabei ein Langloch 32, welches sich im zweiten Hebelarm 221 befindet. Im freien Ende des Hebelarmes 221 sind zwei Zähne mit den beiden Rastflächen 222, 222a vorhanden. Das Langloch endet an diesem Ende in der ebenen Endfläche 36. Am anderen Ende geht das Langloch 32 in einen zum ersten Abschnitt, der sich entlang einer Längsachse erstreckt, versetzten Abschnitt über, der eine Raststelle 33 bildet. Im Normalzustand befindet sich der Sperrhebel 217 in den in den Figuren 8 bis 10 dargestellten Lagen mit der Raststelle 33 auf dem Schwenkzapfen 216. In dem Langloch 32 ist eine Druckfeder 35 aufgenommen, die sich mit einem Ende gegen die Endfläche 36 und mit ihrem anderen Ende gegen den Schwenkzapfen 216 abstützt, so daß der Sperrhebel 217 zu der vorbeschriebenen Position hin beaufschlagt ist. Das Halteelement 211 weist im Bereich des Steges 213 einen vom allgemeinen Verlauf des Steges 213 abgewinkelten Abschnitt auf, der einen Anschlag 34 bildet. Dieser besitzt die Kontaktfläche 31, welche mit einer der Rastflächen 222, 222a des zweiten Hebelarmes 221 des Sperrhebels 217 je nach Schwenkstellung desselben in Kontakt tritt. Der erste Hebelarm 218 des Sperrhebels 217 weist eine Nase auf, die eine gerundete Stützfläche 219 besitzt und mit welcher er auf der Oberseite des Mähfingers 2 zur Anlage kommt. Ausgehend von der in Figur 8 dargestellten geöffneten Stellung wird der Sperrhebel 217 im rechtsschwenkenden Sinne um den Schwenkzapfen 216 verschwenkt. Hierzu kann auf den ersten Hebelarm 218 von außen eingewirkt werden, bis dieser die in Figur 9 dargestellte erste Rastposition einnimmt, bei der die Kontaktfläche 31 in Kontakt zur Rastfläche 222 ist. Dabei befindet sich der Steg 213 mit seiner Unterfläche im Abstand M1 zur Auflage der Stützfläche 219 auf der Oberseite des Mähfingers. Wird weiter auf den Sperrhebel 217 zur Verschwenkung im rechtsschwenkenden Sinne um den Schwenkzapfen 216 eingewirkt, gelangt der Sperrhebel 217 in eine Position, wie sie in Figur 10 dargestellt ist und in der sich der zweite Hebelarm 221 des Sperrhebels 217 mit der Rastfläche 222a gegen die Kontaktfläche 31 des Anschlags 34 abstützt, so daß der Sperrhebel 217 im Öffnungssinne, d.h. im linksdrehenden Sinne um den Schwenkzapfen 216 undrehbar gehalten ist. In dieser Stellung beträgt der Abstand zwischen der Oberseite des Mähfingers und der Unterfläche des Steges 213 dem Maß M2, wobei das Maß M2 kleiner ist als das Maß M1 für die Stellung gemäß Figur 9.

Der Sperrhebel 217 weist des weiteren einen Durchbruch 37 auf, der zum Einführen eines Werkzeuges dient, um den Sperrhebel 217 in die Lösestellung überführen zu können. Nach Einführung eines Werkzeuges, beispielsweise eines Drahtes, kann ziehend auf den Sperrhebel 217 eingewirkt werden, so daß dieser gegen die Kraft der Druckfeder 35 im Langloch 32 eine Verlagerung erfährt, d.h. eine der in Eingriff befindlichen Rastflächen 222 oder 222a außer Kontakt zur Kontaktfläche 31 bewegt werden kann. Der Sperrhebel 217 kann dann im linksschwenkenden Sinne verschwenkt werden und kann automatisch die Position, wie sie beispielsweise in Figur 8 dargestellt ist, einnehmen.

### Bezugszeichenliste

- 1: Mähbalken
- 2: Mähfinger
- 3: Schraube
- 4: Messerbalken
- 5: Klingen
- 6, 106: Tragschiene
- 7: Befestigungsende der Tragschiene
- 8: Rille
- 9: Halmheber
- 10, 110, 210: Befestigungselement
- 11, 111, 211: Halteelement
- 12, 12a, 212, 212a: Schenkel
- 13, 13a, 13b, 213: Steg
- 14: Öffnung
- 15: Niet oder Schraube
- 16, 116, 216: Schwenkzapfen
- 17, 117, 217: Sperrhebel
- 18, 218: erster Hebelarm
- 19, 219: Stützfläche
- 20: Oberseite der Spitze des Mähfingers
- 21, 221: zweiter Hebelarm
- 22, 22a, 22b, 222, 222a: Rastfläche
- 23: Zahn
- 24: Gleitfläche
- 25, 125: Blattfeder (Sperrelement)
- 26: Stirnfläche
- 27: Innenfläche
- 28: Außenfläche
- 29: Bohrung
- 30: Durchbruch
- 31: Kontaktfläche
- 32: Langloch
- 33: Raststelle
- 34: Anschlag
- 35: Druckfeder
- 36: Endfläche
- 37: Durchbruch

- M: Maß

## Patentansprüche

1. Ährenheber für Erntemaschinen-Mähsysteme mit Mähfingern (2), die an einem Mähbalken (1) angebracht sind, umfassend
eine Tragschiene (6, 106), die mit dem Mähbalken (1) verbindbar ist,
einen Halmheber (9), der mit der Tragschiene (6, 106) verbunden ist, und
ein Befestigungselement (10, 110, 210), das mit der Tragschiene (6, 106) verbunden ist und am Mähfinger (2) festlegbar ist, das ein an der Tragschiene (6, 106) angebrachtes Halteelement (11, 111, 211) aufweist, das zwei beabstandete Schenkel (12, 12a) besitzt, zwischen die die Spitze eines Mähfingers (2) einführbar ist, und dem Haltemittel zugeordnet sind, die zur Abstützung mit einer Oberseite (20) des Mähfingers (2) in Kontakt bringbar sind,
**dadurch gekennzeichnet,**
**daß** die Haltemittel einen zweiarmigen Sperrhebel (17, 117, 217) mit einem ersten Hebelarm (18, 218), der eine Stützfläche (19, 219) zur Abstützung an der Oberseite (20) des Mähfingers (2) besitzt, und einen zweiten Hebelarm (21, 221) mit mindestens einer Rastfläche (22, 22a, 22b, 222, 222a) aufweisen, daß der zweiarmige Sperrhebel (17, 117, 217) um einen Schwenkzapfen (16, 116, 216) zwischen den beiden Schenkeln (12, 120) schwenkbar gelagert ist und daß das Befestigungselement (10, 110, 210) ferner ein Sperrelement (25, 34, 125) umfaßt, welches mit einer der Rastflächen (22, 22a, 22b, 222, 222a) des zweiten Hebelarmes (21, 221) in Kontakt bringbar ist und somit den Sperrhebel (17, 117, 217) in seiner Lage hält.

2. Ährenheber nach Anspruch 1,
**dadurch gekennzeichnet,**
**daß** der Sperrhebel (17) drei Rastflächen (22, 22a, 22b) aufweist.

3. Ährenheber nach einem der Ansprüche 1 oder 2,
**dadurch gekennzeichnet,**
**daß** die Rastflächen (22, 22a, 22b) Bestandteil von Rastzähnen (23) sind.

4. Ährenheber nach einem der Ansprüche 1 oder 2,
**dadurch gekennzeichnet,**
**daß** das Sperrelement durch eine in Richtung zu den Rastflächen (22, 22a, 22b) des Sperrhebels (17) federnd in Kontakt tretende Blattfeder (25, 125) dargestellt ist.

5. Ährenheber nach Anspruch 4,
**dadurch gekennzeichnet,**
**daß** eine Stirnfläche (26) der Blattfeder (25) in Anlage zu einer der Rastflächen (22, 22a, 22b) tritt.

6. Ährenheber nach Anspruch 4,
**dadurch gekennzeichnet,**
**daß** die Blattfeder (125) einen Durchbruch (30) aufweist, der eine Kontaktfläche (31) besitzt, und daß der Sperrhebel (117) mit seiner Rastfläche (22, 22a, 22b) zu der Kontaktfläche (31) in Kontakt tritt.

7. Ährenheber nach einem Ansprüche 1 bis 6,
**dadurch gekennzeichnet,**
**daß** der erste und der zweite Hebelarm (18, 21) winklig aneinanderstoßen und die Schwenkachse des Schwenkzapfens (16, 116) im Stoßbereich derselben angeordnet ist.

8. Ährenheber nach Anspruch 1,
**dadurch gekennzeichnet,**
**daß** der zweite Hebelarm (21) durch den Mähfinger (2) bei der Montage in eine erste Raststellung, bei der eine der Rastflächen (22) in Wirkverbindung mit dem Sperrelement (25, 125) tritt, verlagerbar ist.

9. Ährenheber nach Anspruch 1,
**dadurch gekennzeichnet,**
**daß** der Sperrhebel (17, 117, 217) außer Wirkverbindung mit dem Sperrelement (25, 125, 34) bringbar ist.

10. Ährenheber nach Anspruch 1,
**dadurch gekennzeichnet,**
**daß** die Schenkel (12, 12a) durch einen Steg (13) miteinander und der Steg (13) mit der Tragschiene (6) verbunden ist.

11. Ährenheber nach Anspruch 1,
**dadurch gekennzeichnet,**
**daß** die Schenkel (12, 12a) durch zwei voneinander getrennte Stege (13a, 13b) und diese mit der Tragschiene (6) verbunden sind.

12. Ährenheber nach einem der Ansprüche 2 bis 11,
**dadurch gekennzeichnet,**
**daß** die Blattfeder (25, 125) zwischen den beiden Schenkeln (12, 12a) und im Bewegungsbereich des zweiten Hebelarmes (21) angeordnet ist.

13. Ährenheber nach Anspruch 1,
**dadurch gekennzeichnet,**
**daß** der Sperrhebel (217) im Bereich seines zweiten Hebelarmes (221) mit einem Langloch (32) versehen ist, das von dem Schwenkzapfen (216) durchdrungen wird, und daß das Sperrelement als ortsfester Anschlag (34) gestaltet ist.

14. Ährenheber nach Anspruch 13,
**dadurch gekennzeichnet,**
**daß** der Sperrhebel (217) durch Federkraft zu einer Stellung, in der der Anschlag (34) im Bewegungsbereich des zweiten Hebelarmes (221) liegt, beaufschlagt ist.

15. Ährenheber nach Anspruch 13,
**dadurch gekennzeichnet,**
**daß** die beiden Schenkel (212, 212a) des Halteelementes (211) durch einen Steg (213) miteinander verbunden sind, der Anschlag (34) mit dem Steg (213) verbunden ist und der Sperrhebel (217) zwischen den beiden Schenkeln (212, 212a) angeordnet ist.

16. Ährenheber nach Anspruch 14,
**dadurch gekennzeichnet,**
**daß** die Federkraft durch eine Druckfeder (35) dargestellt ist und die Druckfeder (35) in dem Langloch (32) aufgenommen und zwischen einer Endfläche (36) desselben und dem Schwenkzapfen (216) abgestützt ist.

17. Ährenheber nach Anspruch 14,
**dadurch gekennzeichnet,**
**daß** der erste Hebelarm (218) mit einem Durchbruch (37) versehen ist.

18. Ährenheber nach einem der Ansprüche 13 bis 16,
**dadurch gekennzeichnet,**
**daß** das Langloch (32) eine Raststelle (33) zur Aufnahme des Schwenkzapfens (216) aufweist.

19. Ährenheber nach Anspruch 13,
**dadurch gekennzeichnet,**
**daß** die Tragschiene (6, 106) elastisch federnd ausgebildet ist.

## Claims

1. A grain lifter for combine harvester mowing systems having mowing fingers (2) attached to a finger bar (1), comprising
a carrier rail (6, 106) which is connectable to the finger bar (1),
a stem lifter (9) which is connected to the carrier rail (6, 106) and
a fixing element (10, 110, 210) which is connected to the carrier rail (6, 106) and securable to the finger bar (2), which comprises a holding element (11, 111, 211) which is attached to the carrier rail (6, 106), which is provided with two spaced arms (12, 12a) between which the tip of one mowing finger (2) can be inserted, and which is associated with holding means which, for supporting purposes, can be made to contact an upper face (20) of the mowing finger (2),
**characterised in**
**that** the holding means comprise a two-arm locking lever (17, 117, 217) with a first lever arm (18, 218) having a supporting face (19, 219) for being supported on the upper face (20) of the mowing finger (2), and a second lever arm (21, 221) with at least one engaging face (22, 22a, 22b, 222, 222a), that the two-arm locking lever (17, 117, 217) is supported so as to be pivotable around a pivot pin (16, 116, 216) between the two arms (12, 120) and that the fixing element (10, 110, 210), furthermore, comprises a locking element (25, 34, 125) which can be made to contact one of the engaging faces (22, 22a, 22b, 222, 222a) of the second lever arm (21, 221) and thus holds the locking lever (17, 117, 217) in its position.

2. A grain lifter according to claim 1,
**characterised in**
**that** the locking lever (17) comprises three engaging faces (22, 22a, 22b).

3. A grain lifter according to any one of claims 1 or 2,
**characterised in**
**that** the engaging faces (22, 22a, 22b) form part of engaging teeth (23).

4. A grain lifter according to any one of claims 1 or 2,
**characterised in**
**that** the locking element is formed by a leaf spring (25, 125) which resiliently establishes contact in the direction towards the engaging faces (22, 22a, 22b) of the locking lever (17).

5. A grain lifter according to claim 4,
**characterised in**
**that** the end face (26) of the leaf spring (25) comes to rest against one of the engaging faces (22, 22a, 22b).

6. A grain lifter according to claim 4,
**characterised in**
**that** the leaf spring (125) comprises an aperture (30) which is provided with a contact face (31) and that the locking lever (117), by means of its engaging face (22, 22a, 22b), establishes contact with the contact face (31).

7. A grain lifter according to any one of claims 1 to 6,
**characterised in**
**that** the first and the second lever arm (18,21) abut one another at an angle and that the pivot axis of the pivot pin (16, 116) is arranged in the region of abutment of same.

8. A grain lifter according to claim 1,
**characterised in**
**that**, during mouting, the second lever arm (21), by means of the mowing finger (2), is displacable into a first engaging position in which one of the engaging faces (22) enters into an operating connection with the locking element (25, 125).

9. A grain lifter according to claim 1,
**characterised in**
**that** the locking lever (17, 117, 217) can be moved out of the operating connection with the locking element (25, 125, 34).

10. A grain lifter according to claim 1,
**characterised in**
**that** the arms (12, 12a) are connected to one another by a web (13) and that the web (13) is connected to the carrier rail (6).

11. A grain lifter according to claim 1,
**characterised in**
**that** the arms (12, 12a) are connected to one another by two webs (13a, 13b) and that the latter are connected to the carrier rail (6).

12. A grain lifter according to any one of claims 2 to 11,
**characterised in**
**that** the leaf spring (25, 125) is arranged between the two arms (12, 12a) and within the range of movement of the second lever arm (21).

13. A grain lifter according to claim 1,
**characterised in**
**that**, in the region of its second lever arm (221), the locking lever (217) is provided with an oblong hole (32) which is passed by the pivot pin (216) and that the locking element is provided in the form of a stop (34) fixed in position.

14. A grain lifter according to claim 13,
**characterised in**
**that** the locking lever (217) is loaded by spring force into a position in which the stop (34) is within the range of movement of the second lever arm (221).

15. A grain lifter according to claim 13,
**characterised in**
**that** the two arms (212, 212a) of the holding element (211) are connected to one another by a web (213), that the stop (34) is connected to the web (213) and that the locking lever (217) is arranged between the two arms (212, 212a).

16. A grain lifter according to claim 14,
**characterised in**
**that** the spring force is provided by a pressure spring (35) and that the pressure spring (35) is received in the oblong hole (32) and is supported between an end face (36) of same and the pivot pin (216).

17. A grain lifter according to claim 14,
**characterised in**
**that** the first lever arm (218)is provided with an aperture (37).

18. A grain lifter according to one of claims 13 to 16,
**characterised in**
**that** the oblong hole (32) comprises an engaging region for receiving the pivot pin (216).

19. A grain lifter according to claim 13,
**characterised in**
**that** the carrier rail (6, 106) is designed so as to be elastically resilient.

## Revendications

1. Releveur d'épis pour des systèmes de moissonnage dans des machines de récolte, comprenant des doigts de coupe (2) montés sur une barre de coupe (1), comprenant :
- un rail porteur (6, 106) susceptible d'être relié à la barre de coupe (1),
- un releveur de tiges (9), relié au rail porteur (6, 106), et
- un élément de fixation (10, 110, 210), qui est relié au rail porteur (6, 106) et au doigt de coupe (2), qui comprend un élément de maintien (11, 111, 211) monté sur le rail porteur (6, 106), qui possède deux joues écartées (12, 12a) entre lesquelles la pointe d'un doigt de coupe (2) est susceptible d'être introduite, et auquel sont associés des moyens de maintien susceptibles d'être amenés en contact avec une face supérieure (20) du doigt de coupe (2) pour le soutien,
**caractérisé en ce que** :
- les moyens de maintien comprennent un levier de blocage à deux bras (17, 117, 217) avec un premier bras de levier (18, 218) qui possède une surface de soutien (19, 219) pour le soutien sur la face supérieure (20) du doigt de coupe (2), et un deuxième bras de levier (21, 221) avec au moins une surface d'enclenchement (22, 22a, 22b, 222, 222a),
- le levier de blocage à deux bras (17, 117, 217) est monté avec faculté de basculement autour d'un tourillon de basculement (16, 116, 216) entre les deux joues (12, 120), et
- l'élément de fixation (10,110, 210) comprend en outre un élément de blocage (25, 34, 125) susceptible d'être amené en contact avec l'une des surfaces d'enclenchement (22, 22a, 22b, 222, 222a) du deuxième bras de levier (21, 221) et maintient par conséquent le levier de blocage (17, 117, 217) dans sa position.

2. Releveur d'épis selon la revendication 1, **caractérisé en ce que** le levier de blocage (17) présente trois surfaces d'enclenchement (22, 22a, 22b).

3. Releveur d'épis selon l'une ou l'autre des revendications 1 et 2, **caractérisé en ce que** les surfaces d'enclenchement (22, 22a, 22b) font partie de dents d'enclenchement (23).

4. Releveur d'épis selon l'une ou l'autre des revendications 1 et 2, **caractérisé en ce que** l'élément de blocage est représenté par une lame de ressort (25, 125) qui entre en contact élastique en direction des surfaces d'enclenchement (22, 22a, 22b) du levier de blocage (17).

5. Releveur d'épis selon la revendication 4, **caractérisé en ce qu'**une surface frontale (26) du ressort à lame (25) entre en contact avec l'une des surfaces d'enclenchement (22, 22a, 22b).

6. Releveur d'épis selon la revendication 4, **caractérisé en ce que** le ressort à lame (125) présente une traversée (30) qui possède une surface de contact (31), et **en ce que** le levier de blocage (117) entre en contact par sa surface d'enclenchement (22, 22a, 22b) avec la surface de contact (31).

7. Releveur d'épis selon l'une des revendications 1 à 6, **caractérisé en ce que** le premier et le deuxième bras de levier (18, 21) se rejoignent sous un angle, et **en ce que** l'axe de basculement du tourillon de basculement (16, 116) est agencé dans la zone de jonction de ceux-ci.

8. Releveur d'épis selon la revendication 1, **caractérisé en ce que** le deuxième bras de levier (21) est susceptible d'être déplacé par le doigt de coupe (2) lors du montage jusque dans une première position d'enclenchement dans laquelle l'une des surfaces d'enclenchement (22) entre en liaison d'action avec l'élément de blocage (25, 125).

9. Releveur d'épis selon la revendication 1, **caractérisé en ce que** le levier de blocage (17, 117, 217) est susceptible d'être amené hors de sa liaison d'action avec l'élément de blocage (25, 125, 34).

10. Releveur d'épis selon la revendication 1, **caractérisé en ce que** les joues (12, 12a) sont reliées l'une à l'autre par une âme (13), et l'âme (13) est reliée au rail porteur (6).

11. Releveur d'épis selon la revendication 1, **caractérisé en ce que** les joues (12, 12a) sont reliées par deux âmes (13a, 13b) séparées l'une de l'autre, et celles-ci sont reliées au rail porteur (6).

12. Releveur d'épis selon l'une des revendications 2 à 11, **caractérisé en ce que** le ressort à lame (25, 125) est agencé entre les deux joues (12, 12a) et dans la zone de déplacement du deuxième bras de levier (21).

13. Releveur d'épis selon la revendication 1, **caractérisé en ce que**, dans la zone de son deuxième bras de levier (221), le levier de blocage (217) est pourvu d'un trou oblong (32) qui est traversé par le tourillon de basculement (216), et **en ce que** l'élément de blocage est conçu sous la forme d'une butée stationnaire (34).

14. Releveur d'épis selon la revendication 13, **caractérisé en ce que** le levier de blocage (217) est sollicité par la force d'un ressort vers une position dans laquelle la butée (34) se trouve dans la zone de déplacement du deuxième bras de levier (221).

15. Releveur d'épis selon la revendication 13, **caractérisé en ce que** les deux joues (212, 212a) de l'élément de maintien (211) sont reliées l'une à l'autre par une âme (213), la butée (34) est reliée à l'âme (213), et le levier de blocage (217) est agencé entre les deux joues (212, 212a).

16. Releveur d'épis selon la revendication 14, **caractérisé en ce que** la force de ressort est représentée par un ressort de compression (35), et **en ce que** le ressort de compression (35) est reçu dans le trou oblong (32) et soutenu entre une surface terminale (36) de celui-ci et le tourillon de basculement (216).

17. Releveur d'épis selon la revendication 14, **caractérisé en ce que** le premier bras de levier (218) est pourvu d'une traversée (37).

18. Releveur d'épis selon l'une des revendications 13 à 16, **caractérisé en ce que** le trou oblong (32) comporte un emplacement d'enclenchement (33) pour la réception du tourillon de basculement (216).

19. Releveur d'épis selon la revendication 13, **caractérisé en ce que** le rail porteur (6, 106) est réalisé à la manière d'un ressort élastique.
